# EUROPÄISCHE PATENTSCHRIFT

(11) **EP 3 575 520 B1**
(45) Veröffentlichungstag und Bekanntmachung des Hinweises auf die Patenterteilung: **30.12.2020**
(21) Anmeldenummer: 19173197.5
(22) Anmeldetag: 08.05.2019
(51) Int. Cl.: E05B 67/22, E05B 47/00

(54) **BÜGELSCHLOSS**
SHACKLE LOCK
CADENAS À ARCEAU

(30) Priorität: 11.05.2018 DE 102018111305
(43) Veröffentlichungstag der Anmeldung: 04.12.2019
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A2- 2 267 256
- CN-A- 106 836 989
- FR-A- 596 278
- FR-A- 644 221
- US-A- 105 710
- US-A- 848 633
- US-A- 957 033
- US-A- 1 659 664
- US-A- 1 703 193

## Beschreibung

Die Erfindung betrifft ein Bügelschloss mit einem Schlosskörper und einem Bügel, der relativ zu dem Schlosskörper zwischen einer Öffnungsstellung und einer Schließstellung bewegbar ist, wobei in dem Schlosskörper ein Riegel angeordnet ist, welcher wahlweise in eine Entriegelungsstellung oder in eine Verriegelungsstellung bewegbar ist, wobei der Riegel den Bügel an dem Schlosskörper verriegelt, wenn der Bügel sich in der Schließstellung befindet und der Riegel sich in der Verriegelungsstellung befindet.

Ein derartiges Bügelschloss ist beispielsweise als ein Vorhängeschloss bekannt, das einen im Wesentlichen U-förmigen Bügel besitzt. Der Bügel kann in seiner Öffnungsstellung durch eine Öse oder dergleichen geführt werden, um ein Objekt (z.B. eine Tür mit Überfalle) zu sichern.

Bei einer anderen Ausführungsform ist ein derartiges Bügelschloss als ein Bremsscheibenschloss ausgebildet, das zum Sichern beispielsweise eines Motorrads, eines Motorrollers oder eines Fahrrads gegen eine unbefugte Benutzung dient. Hierfür durchgreift der Bügel eine Öffnung einer Bremsscheibe des geparkten Fahrzeugs. Durch den in der Schließstellung verriegelten Bügel ist das Schloss somit an der Bremsscheibe gefangen, und die Benutzung des Fahrzeugs wird verhindert, bis das Schloss wieder von der Bremsscheibe gelöst wird.

Die Verriegelungseinrichtung eines derartigen Bügelschlosses muss innerhalb des Schlossgehäuses bewegliche Teile besitzen, um den Bügel in seiner Schließstellung wahlweise an dem Schlosskörper verriegeln zu können. Hierfür besitzt das Schlossgehäuse üblicherweise unterschiedliche Halte- und Führungsabschnitte für die beweglichen Teile der Verriegelungseinrichtung, die insbesondere dreidimensional strukturiert sind. Hierdurch besitzt der Schlosskörper jedoch einen unerwünscht komplexen Aufbau und ist dementsprechend teuer in der Herstellung. Oftmals besitzt der Schlosskörper für manche Anwendungen unerwünscht große Abmessungen.

Ein gattungsgemäßes Bügelschloss ist in FR 596 278 A offenbart. Weitere Bügelschlosser sind in US 105 710 A, US 1 703 193 A, US 957 033 A und DE 10 2009 030 031 A1 offenbart.

Es ist eine Aufgabe der Erfindung, ein Bügelschloss der eingangs genannten Art zu schaffen, das einen einfachen Aufbau aufweist und eine schmale Bauform ermöglicht, wobei gleichzeitig eine stabile Kraftübertragung zwischen dem Bügel einerseits und dem Riegel bzw. dem Schwenkhebel und dessen Schwenklager andererseits erhalten wird.

Die Lösung der Aufgabe erfolgt durch ein Bügelschloss mit den Merkmalen des Anspruchs 1.

Bei dem Bügelschloss ist der Riegel an einem um eine Schwenkachse schwenkbaren Schwenkhebel befestigt und zwischen der Entriegelungsstellung und der Verriegelungsstellung durch eine Schwenkbewegung des Schwenkhebels bewegbar.

Der Riegel führt zwischen der Entriegelungsstellung und der Verriegelungsstellung ebenfalls eine Schwenkbewegung entlang einer gekrümmten Trajektorie aus, was durch eine Beabstandung des Riegels von der Schwenkachse erzielt wird. Der Schwenkhebel kann beispielsweise innen an dem Schlosskörper (insbesondere einem Gehäuseabschnitt) gelagert sein. Durch die Anordnung des Riegels an einem Schwenkhebel kann die Anzahl an Bauteilen, insbesondere an beweglichen Bauteilen, im Vergleich zu einem Bügelschloss mit einem linear versetzbaren Riegel reduziert werden. Die Anfälligkeit gegenüber Korrosion oder Verschmutzung, die bei herkömmlichen Bügelschlössern mit einem linear bewegbaren Riegel zu einem Klemmen des Riegels oder anderen Funktionsbeeinträchtigungen führen können, ist reduziert.

Der Riegel umfasst erfindungsgemäß zwei einander entgegengesetzte Enden, die auf zueinander gegenüber liegenden Seiten des Schwenkhebels angeordnet sind, wobei der Bügel zwei Verriegelungsabschnitte aufweist, und wobei jedes der zwei Enden des Riegels mit einem der zwei Verriegelungsabschnitte des Bügels in Eingriff steht, wenn der Bügel sich in der Schließstellung befindet und der Riegel sich in der Verriegelungsstellung befindet. Die beiden Enden des Riegels sind entlang einer Achse ausgerichtet, die parallel zu der Schwenkachse des Schwenkhebels verläuft. Indem der Riegel über zwei Enden an dem Bügel angreift, zwischen denen der Schwenkhebel verläuft, ist eine gleichmäßige und somit besonders stabile Kraftübertragung zwischen dem Bügel einerseits und dem Riegel bzw. dem Schwenkhebel und dessen Schwenklager andererseits möglich, insbesondere ohne zusätzliche Kippmomente (abgesehen von der beabsichtigten Schwenkbewegung um die Schwenkachse).

Der Riegel kann an dem Schwenkhebel dadurch befestigt sein, dass der Riegel und der Schwenkhebel ursprünglich zwei separate Bauteile bilden, die dauerhaft miteinander verbunden sind; oder dass der Riegel und der Schwenkhebel originär einteilig ausgebildet sind. Der Riegel kann insbesondere stiftförmig ausgestaltet sein. Der Riegel kann sich insbesondere parallel zu der Schwenkachse des Schwenkhebels erstrecken. Da der Riegel fest mit dem Schwenkhebel gekoppelt ist, sind die Entriegelungsstellung und die Verriegelungsstellung des Riegels mit einer Entriegelungsstellung bzw. Verriegelungsstellung des Schwenkhebels identisch.

Gemäß einer vorteilhaften Ausführungsform weist der Schwenkhebel einschließlich des Riegels eine Massenverteilung bezüglich der Schwenkachse auf, welche derart gewählt ist, dass ein quer zur Schwenkachse auf das Bügelschloss einwirkender Impuls zumindest im Wesentlichen keine Schwenkbewegung des Schwenkhebels verursacht. Bei dem genannten Impuls kann es sich insbesondere um einen in Richtung der Entriegelungsstellung des Riegels gerichteten Impuls handeln. Um ein Schloss in unbefugter Weise zu öffnen, wird bei einer auch als Hammerschlagmethode bekannten Manipulation versucht, durch einen gezielten kräftigen Schlag mit einem Hammer auf den Schlosskörper diesen stark zu beschleunigen, wobei der Riegel aufgrund seiner Massenträgheit diese Beschleunigung nur teilweise und insbesondere zeitverzögert erfährt. Hierdurch soll der Riegel aufgrund der Relativbewegung zwischen Schlosskörper und Riegel zumindest kurzzeitig in seine Entriegelungsstellung gelangen, wodurch der Bügel zumindest zeitweilig freigegeben wird und geöffnet werden kann bzw. selbsttätig aufspringt.

Unter Umständen reicht allein die Kraft einer zur Vorspannung des Riegels in die Verriegelungsstellung vorgesehenen Feder nicht aus, um eine solche auf der Massenträgheit des Riegels beruhende Manipulation zu verhindern. Durch die Anordnung des Riegels an einem Schwenkhebel ist jedoch ein Massenausgleich möglich, der im Idealfall eine im Wesentlichen unwuchtfreie Massenverteilung des Schwenkhebels einschließlich des Riegels bewirkt, so dass einerseits diejenige Hauptträgheitsmomentachse des Schwenkhebels einschließlich Riegel, die parallel zu der Schwenkachse des Schwenkhebels verläuft, und andererseits die Schwenkachse zumindest im Wesentlichen zusammenfallen. Zumindest kann jedoch durch eine geeignete Wahl der Massenverteilung eine Unwucht so weit reduziert werden, dass beispielsweise eine Vorspannung des Riegels durch eine Feder eine impulsinduzierte Schwenkbewegung verhindert. Der Ausgleich der Massenverteilung bezieht insbesondere Hebelarme, die gemäß einer nachfolgend noch näher beschriebenen Ausführungsform am Schwenkhebel vorgesehen sein können, und auch andere Ausformungen sowie den Riegel mit ein. Ein solcher Massenausgleich ist bei einem linear versetzbaren Riegel nicht oder nur mit erheblichem Mehraufwand möglich.

Vorteilhafterweise umfasst der Schwenkhebel einen ersten Hebelarm und einen zweiten Hebelarm, wobei der Riegel an dem ersten Hebelarm insbesondere von der Schwenkachse beabstandet befestigt ist. Der zweite Hebelarm kann unter anderem als Ausgleichsgewicht für den vorstehend beschriebenen Massenausgleich dienen und zusätzlich auch eine Bewegung einer Betätigungseinrichtung für das Bügelschloss auf den Riegel übertragen. Die Hebelarme können insbesondere einander bezüglich der Schwenkachse gegenüberliegend angeordnet sein. Vorteilhafterweise weisen die Hebelarme im Wesentlichen gleiche Trägheitsmomente bezüglich der Schwenkachse des Schwenkhebels auf.

Gemäß einer weiteren vorteilhaften Ausführungsform ist der Riegel in Richtung der Verriegelungsstellung vorgespannt. Die Vorspannung des Riegels ist aufgrund der festen Kopplung gleichbedeutend mit einer Vorspannung des Schwenkhebels in Richtung der Verriegelungsstellung. Die Vorspannung kann beispielsweise mittels einer Feder, insbesondere einer Druckfeder oder einer Zugfeder, zum Beispiel in Form einer Spiralfeder, erfolgen. Durch die Vorspannung des Riegels in Richtung der Verriegelungsstellung ist insbesondere ein automatisches Verriegeln bei einem Schließen des Bügels möglich.

Gemäß einer weiteren vorteilhaften Ausführungsform ist in dem Schlosskörper eine Betätigungseinrichtung angeordnet, welche mit dem Schwenkhebel zusammenwirkt, um den Riegel entgegen seiner Vorspannung von der Verriegelungsstellung in die Entriegelungsstellung zu bewegen. Eine Rückstellung des Riegels aus der Entriegelungsstellung in die Verriegelungsstellung erfolgt durch die Vorspannung des Riegels. Die Betätigungseinrichtung muss demnach nur den Entriegelungsvorgang unterstützen oder veranlassen.

Vorteilhafterweise wirkt die Betätigungseinrichtung mit dem zweiten Hebelarm zusammen. Hierdurch kann insbesondere eine Kraftumlenkung erfolgen, so dass die Bewegungsrichtung des Riegels und eine von der Betätigungsvorrichtung ausgeübte Bewegungsrichtung in unterschiedliche, bevorzugt entgegengesetzte Richtungen verlaufen. Dadurch kann eine kompakte Bauweise des Bügelschlosses realisiert werden.

Gemäß noch einer weiteren vorteilhaften Ausführungsform umfasst die Betätigungseinrichtung eine um eine Drehachse drehbare Nockenscheibe mit einem bezüglich der Drehachse exzentrisch verlaufenden Steuerabschnitt, wobei der Steuerabschnitt den Schwenkhebel von der Verriegelungsstellung in die Entriegelungsstellung verschwenkt, wenn sich die Nockenscheibe in einer vorbestimmten Entriegelungsposition befindet. Die vorbestimmte Entriegelungsposition umfasst nicht zwingend einen diskreten Winkel, sondern kann sich auch über einen vorgegebenen Winkelbereich erstrecken. Wenn sich die Nockenscheibe außerhalb der Entriegelungsposition befindet, ist der Steuerabschnitt außer Eingriff mit dem Schwenkhebel, so dass der Schwenkhebel frei beweglich ist. Diese freie Beweglichkeit ermöglicht insbesondere das vorstehend erwähnte automatische Verriegeln des Bügels.

Vorteilhafterweise umfasst die Betätigungseinrichtung einen Elektromotor und eine mit dem Elektromotor verbundene Steuereinheit, wobei die Steuereinheit dazu eingerichtet ist, nach Empfang eines übermittelten Entriegelungsbefehls den Elektromotor derart zu betätigen, dass der Steuerabschnitt den Schwenkhebel zumindest vorübergehend in die Entriegelungsstellung verschwenkt. Der Entriegelungsbefehl kann insbesondere drahtlos übermittelt werden, beispielsweise per Funk durch eine Fernbedienungseinheit. Alternativ kann die Betätigungseinrichtung auch einen schlüsselbetätigten Schließzylinder umfassen, wobei die Nockenscheibe direkt oder indirekt über weitere Übertragungsglieder von dem Schließzylinder angetrieben werden kann. Ein zumindest vorübergehendes Verschwenken des Schwenkhebels in die Entriegelungsstellung bedeutet, dass der Schwenkhebel entweder vorübergehend, d.h. für eine kurze, insbesondere vorgegebene Zeitdauer in die Entriegelungsstellung verschwenkt wird, wobei die Nockenscheibe nicht zwingend in der Entriegelungsposition angehalten werden muss, was nachfolgend noch näher erläutert wird. Alternativ kann die Betätigungseinrichtung jedoch auch bewirken, dass die Nockenscheibe in der Entriegelungsposition angehalten wird, so dass sich der Schwenkhebel auch länger andauernd in der Entriegelungsstellung verharren kann.

In dem Zusammenhang hat es sich als vorteilhaft erwiesen, wenn die Steuereinheit dazu eingerichtet ist, nach Empfang eines übermittelten Entriegelungsbefehls den Elektromotor derart zu betätigen, dass die Nockenscheibe genau um eine Umdrehung oder ein ganzzahliges Vielfaches einer Umdrehung gedreht wird. Hierbei entriegelt der Steuerabschnitt der Nockenscheibe den Bügel nur vorübergehend. Während der Zeitdauer der Entriegelung kann der Bügel geöffnet werden, beispielsweise in einer nachstehend noch näher beschriebener Weise automatisch durch eine entsprechende Vorspannung. Um das exakte Einhalten der genau einen oder mehrfachen Umdrehung der Nockenscheibe zu gewährleisten, kann es erforderlich sein, die Drehstellung der Nockenscheibe zu ermitteln. Hierfür kann ein Detektor, insbesondere ein Positionsschalter zum optischen oder mechanischen Abtasten der Nockenscheibe, insbesondere einer an der Nockenscheibe vorgesehenen Positionsmarkierung oder Erhebung, vorgesehen sein.

Vorteilhafterweise weisen der Bügel und/oder ein Innengehäuse des Schlosskörpers eine jeweilige schlitzförmige Ausnehmung auf, wobei sich der erste Hebelarm des Schwenkhebels in die jeweilige Ausnehmung hinein erstreckt, insbesondere während der Riegel sich in der Verriegelungsstellung befindet und/oder während der Riegel sich in der Entriegelungsstellung befindet. Dadurch wird ein besonders kompakter Aufbau des Bügelschlosses möglich, und der Schwenkhebel kann durch seinen Eingriff in die schlitzförmige Ausnehmung seitlich stabilisiert sein. Die jeweilige Ausnehmung befindet sich vorteilhafterweise in einer Haupterstreckungsebene des Bügels und fällt mit einer durch den ersten Hebelarm verlaufenden Schwenkebene des Schwenkhebels zusammen, so dass eine symmetrische Anordnung von Riegel und Bügel bezüglich der Bügelerstreckungsebene und damit eine gleichmäßige Kraftübertragung zwischen Bügel, Riegel und Schlosskörper gegeben ist. Die Ausnehmung erstreckt sich insbesondere längs einer linearen Bewegungsrichtung des Bügels. Der Riegel erstreckt sich bevorzugt zu beiden Seiten des ersten Hebelarms, d.h. beiderseits der durch den ersten Hebelarm verlaufenden Schwenkebene des Schwenkhebels.

Gemäß einer weiteren vorteilhaften Ausführungsform ist der Bügel in Richtung der Öffnungsstellung vorgespannt, wobei der Bügel durch die Vorspannung von der Schließstellung in die Öffnungsstellung bewegt wird, wenn der Riegel in die Entriegelungsstellung bewegt wird. Dadurch vereinfacht sich die Bedienung des Bügelschlosses, da lediglich die Entriegelungsbewegung des Riegels initiiert werden muss, nicht jedoch die automatische Öffnungsbewegung des Bügels.

Vorteilhafterweise weist der Bügel einen Kulissenabschnitt auf, welcher mit dem Riegel derart zusammenwirkt, dass durch ein Bewegen des Bügels von der Öffnungsstellung in die Schließstellung der Riegel entgegen seiner Vorspannung vorübergehend in die Entriegelungsstellung bewegt wird und beim Erreichen der Schließstellung aufgrund seiner Vorspannung zurück in die Verriegelungsstellung bewegt wird und in Eingriff mit den Verriegelungsabschnitten des Bügels gelangt. Wenn sich der Bügel in der Schließstellung befindet und der Riegel sich in der Verriegelungsstellung befindet, verhindert ein Zusammenwirken des Riegels mit den Verriegelungsabschnitten ein Öffnen des Bügels. Der Eingriff kann derart erfolgen, dass durchaus noch ein geringfügiges Spiel zwischen den Verriegelungsabschnitt und dem Riegel vorhanden sein kann. Ein Verriegelungsabschnitt und/oder der Kulissenabschnitt können sich insbesondere im Bereich der vorstehend erwähnten schlitzförmigen Ausnehmung befinden, was zur Folge haben kann, dass der Verriegelungsabschnitt und/oder der Kulissenabschnitt zweigeteilt, d.h. durch die schlitzförmige Ausnehmung unterbrochen sein können.

Vorteilhafterweise umfasst der Schlosskörper einen Blockierabschnitt, mit welchem der Riegel in Eingriff steht, wenn der Riegel sich in der Verriegelungsstellung befindet. Alternativ hierzu kann der Schlosskörper einen Blockierabschnitt aufweisen, welcher unmittelbar benachbart zu dem Riegel angeordnet ist, wenn der Riegel sich in der Verriegelungsstellung befindet, insbesondere unmittelbar benachbart in einer Richtung, die der Bewegungsrichtung des Bügels bei einer Bewegung von der Schließstellung in die Öffnungsstellung entspricht. Dadurch können Kräfte, die bei einem gewaltsamen Öffnungsversuch des Bügels vom Bügel auf den Riegel und damit auf eine Lagerung des Schwenkhebels einwirken, ganz oder teilweise über den Blockierabschnitt auf den Schlosskörper abgeleitet werden. Der Blockierabschnitt ist hierfür vorteilhafterweise entsprechend massiv ausgebildet. Der Blockierabschnitt kann ebenfalls eine Ausnehmung aufweisen und dadurch zweigeteilt sein.

Gemäß einer vorteilhaften Ausführungsform ist der Bügel linear in einer Bewegungsrichtung beweglich. Alternativ oder zusätzlich kann der Bügel auch schwenkbar an dem Schlosskörper gelagert sein.

Gemäß einer besonders vorteilhaften Ausführungsform ist das Bügelschloss als ein Bremsscheibenschloss mit einem Aufnahmespalt für eine Bremsscheibe ausgebildet, wobei der Bügel in der Öffnungsstellung außerhalb des Schlosskörpers im Wesentlichen L-förmig ist und einen länglichen Sicherungsabschnitt und einen länglichen Verbindungsabschnitt aufweist, wobei der Sicherungsabschnitt sich quer zu der Bewegungsrichtung des Bügels erstreckt und ein freies Ende besitzt, wobei der Verbindungsabschnitt sich im Wesentlichen parallel zu der Bewegungsrichtung des Bügels erstreckt und den Sicherungsabschnitt mit dem Schlosskörper verbindet, und wobei der Bügel in der Schließstellung zusammen mit dem Schlosskörper den Aufnahmespalt umgrenzt. Somit ist der Bügel in seiner Öffnungsstellung im Wesentlichen hakenartig geformt und seitlich offen. Das genannte freie Ende des Sicherungsabschnitts kann somit in eine Befestigungsöffnung eines zu sichernden Objekts eingeführt werden, insbesondere in eine Belüftungsöffnung einer Bremsscheibe, die sich in dem Aufnahmespalt des Bremsscheibenschlosses bzw. des Schlosskörpers befindet. Durch Bewegen des Bügels in die Schließstellung wird ein Formschluss des Sicherungsabschnitts des Bügels mit dem Schlosskörper bewirkt, um das Bügelschloss an dem zu sichernden Objekt festzulegen. Der Sicherungsabschnitt verschließt den Aufnahmespalt, wenn der Bügel sich in der Schließstellung befindet.

Gemäß einer Ausführungsform kann der Verbindungsabschnitt des Bügels einen nicht-runden Querschnitt aufweisen, insbesondere mit einem im Wesentlichen rechteckigen Außenumfang. Hierdurch kann der Bügel, beispielsweise für die Anwendung des Bügelschlosses als Bremsscheibenschloss, an dem Schlosskörper zwar längsbeweglich, jedoch verdrehsicher gelagert sein.

Vorteilhafterweise spannt der Bügel eine Bügelerstreckungsebene auf, wobei die Schwenkachse des Schwenkhebels senkrecht zu der Bügelerstreckungsebene verläuft. Die Bügelerstreckungsebene wird insbesondere durch den genannten Sicherungsabschnitt und den genannten Verbindungsabschnitt aufgespannt. Durch die senkrechte Anordnung der Schwenkachse in Bezug auf die Bügelerstreckungsebene lässt sich ein besonders kompakter und insbesondere flacher Aufbau des Bügelschlosses erzielen. Insbesondere kann die Bewegungsebene des Schwenkhebels mit der Bügelerstreckungsebene zusammenfallen oder parallel versetzt hierzu verlaufen.

Es hat sich ferner als vorteilhaft erwiesen, wenn die Drehachse der Nockenscheibe in der Bügelerstreckungsebene oder parallel versetzt hierzu verläuft, wobei der Steuerabschnitt an einer Umfangsseite der Nockenscheibe angeordnet ist. Insofern der Bügel linear in einer Bewegungsrichtung beweglich ist, verläuft vorteilhafterweise die Drehachse der Nockenscheibe und insbesondere auch die Drehachse des genannten Elektromotors parallel zu der Bewegungsrichtung des Bügels. Die Wirkrichtung des genannten Steuerabschnitts verläuft somit radial nach außen gerichtet, d.h. senkrecht zu der Drehachse der Nockenscheibe. Die genannte Ausrichtung der Drehachse der Nockenscheibe unterstützt zusätzlich die Verwirklichung eines möglichst kompakten und insbesondere flachen Aufbaus des Bügelschlosses.

Weitere vorteilhafte Ausführungsformen der Erfindung ergeben sich aus den abhängigen Ansprüchen, den Zeichnungen und der Beschreibung.

Die Erfindung wird nachfolgend lediglich beispielhaft unter Bezugnahme auf die Zeichnungen erläutert, wobei die Erfindung nicht auf das nachfolgend beschriebene Bremsscheibenschloss beschränkt ist, sondern auch bei anderen Typen von Bügelschlössern Anwendung findet, beispielsweise bei Vorhängeschlössern.

Es zeigen:
- Fig. 1 und 2: eine Perspektivansicht eines Bremsscheibenschlosses in einer Schließstellung bzw. einer Öffnungsstellung des Bügels;
- Fig. 3: eine Perspektivansicht von Teilen des Bremsscheibenschlosses von Fig. 2 bei entferntem Gehäuse;
- Fig. 4: einen Längsschnitt des Bremsscheibenschlosses von Fig. 1 in der Schließstellung des Bügels und einer Verriegelungsstellung des Riegels;
- Fig. 5: einen Längsschnitt des Bremsscheibenschlosses von Fig. 1 entlang einer Ebene, die senkrecht zu der Schnittebene gemäß Fig. 4 steht;
- Fig. 6: einen weiteren Längsschnitt des Bremsscheibenschlosses von Fig. 1 entlang einer Ebene, die parallel zu der Schnittebene gemäß Fig. 4 verläuft;
- Fig. 7: einen Längsschnitt des Bremsscheibenschlosses von Fig. 1 gemäß Fig. 4 bei entferntem Innengehäuse;
- Fig. 8: einen Querschnitt des Bremsscheibenschlosses von Fig. 1 (Verriegelungsstellung des Riegels);
- Fig. 9: einen Längsschnitt des Bremsscheibenschlosses von Fig. 1 in einer Entriegelungsstellung des Riegels;
- Fig. 10: einen Längsschnitt des Bremsscheibenschlosses gemäß Fig. 9 bei entferntem Innengehäuse;
- Fig. 11: einen Querschnitt des Bremsscheibenschlosses gemäß Fig. 9 und 10 (Entriegelungsstellung des Riegels);
- Fig. 12 und 13: einen Längsschnitt bzw. einen Querschnitt des Bremsscheibenschlosses in einer Zwischenstellung des Bügels; und
- Fig. 14 und 15: einen Längsschnitt bzw. einen Querschnitt des Bremsscheibenschlosses in der Öffnungsstellung des Bügels.

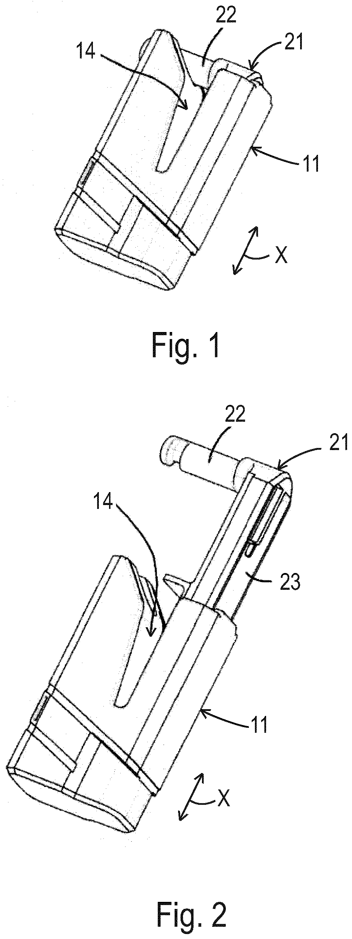

Fig. 1 und 2 zeigen ein Bügelschloss, das als ein Bremsscheibenschloss ausgebildet ist und einen Schlosskörper 11 und einen Bügel 21 aufweist. Der Bügel 21 ist an dem Schlosskörper 11 translatorisch, d.h. linear in einer Bewegungsrichtung X beweglich gelagert. Fig. 1 zeigt den Bügel 21 in einer Schließstellung, während Fig. 2 den Bügel 21 in einer Öffnungsstellung zeigt.

Der Schlosskörper 11 besitzt ein Außengehäuse 13, das durch einen Rohrabschnitt mit einem im Wesentlichen rechteckigen Querschnitt und abgerundeten Kanten ausgebildet ist. Die Längsachse des Außengehäuses 13 entspricht der Bewegungsrichtung X des Bügels 21. An dem für das Ausfahren des Bügels 21 vorgesehenen Ende besitzt das Außengehäuse 12 einen Aufnahmespalt 14.

Bezogen auf die Öffnungsstellung gemäß Fig. 2, in welcher der Bügel 21 aus dem Schlosskörper 11 ausgefahren ist, besitzt der Bügel außerhalb des Schlosskörpers 11 im Wesentlichen eine L-Form. Der eine Schenkel dieser L-Form ist durch einen länglichen Sicherungsabschnitt 22 in Form eines gehärteten Bolzens gebildet, der sich senkrecht zu der Bewegungsrichtung X des Bügels 21 erstreckt. Der andere Schenkel der L-Form ist durch einen länglichen Verbindungsabschnitt 23 gebildet, der sich parallel zu der Bewegungsrichtung X erstreckt. Der Verbindungsabschnitt 23 geht innerhalb des Schlosskörpers 11 in einen Halteabschnitt 29 über. Der Sicherungsabschnitt 22, der Verbindungsabschnitt 23 und der Halteabschnitt 29 können durch ein einziges Gussteil gebildet sein.

Das gezeigte Bremsscheibenschloss dient zum Sichern eines Motorrads oder dergleichen gegen eine unbefugte Benutzung. Hierfür wird in der Öffnungsstellung des Bügels 21 gemäß Fig. 2 das freie Ende des Sicherungsabschnitts 22 in eine Öffnung einer Bremsscheibe des betreffenden Fahrzeugs eingeführt. Anschließend wird der Schlosskörper 11 derart auf die Bremsscheibe aufgesetzt, dass die Bremsscheibe in den Aufnahmespalt 14 eingreift und der Bügel 21 die Schließstellung gemäß Fig. 1 einnimmt, in welcher der Sicherungsabschnitt 22 des Bügels 21 den Aufnahmespalt 14 verschließt.

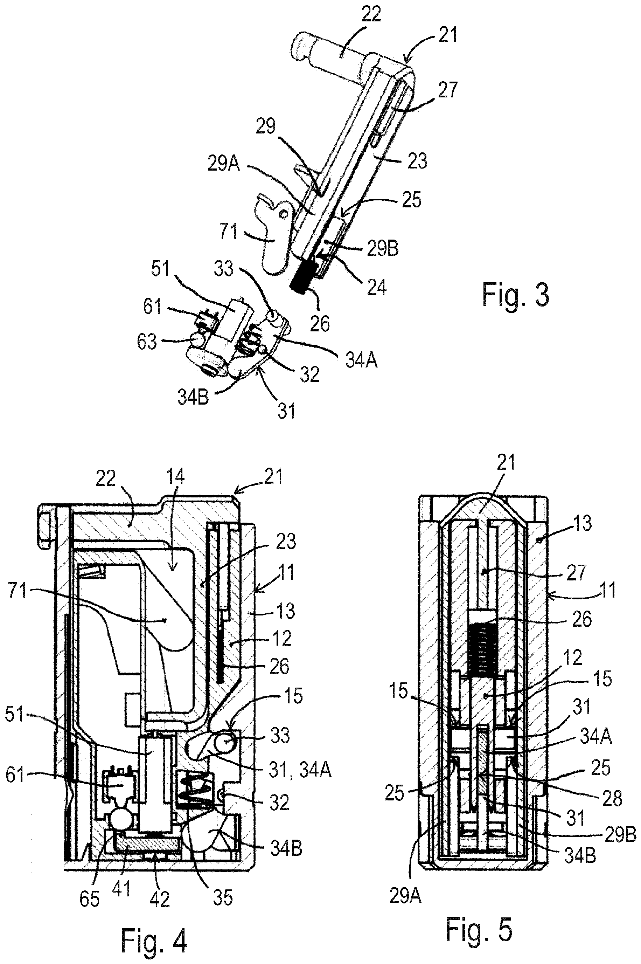

Fig. 3 zeigt den Bügel 21 in der Öffnungsstellung, wobei das Außengehäuse 13 und ein Innengehäuse 12 des Schlosskörpers 11 weggelassen sind. Zu erkennen sind somit neben dem Sicherungsabschnitt 22, dem Verbindungsabschnitt 23 und dem Halteabschnitt 29 des Bügels 21 ein Schwenkhebel 31, welcher einen ersten Hebelarm 34A und einen zweiten Hebelarm 34B aufweist. Am freien Ende des ersten Hebelarms 34A ist ein stiftförmiger, einen zylindrischen Querschnitt aufweisender Riegel 33 angeordnet. Ferner ist eine Betätigungseinrichtung für den Schwenkhebel 31 dargestellt, welche nachfolgend noch näher beschrieben wird. Schließlich ist auch eine Wippe 71 dargestellt, deren Funktion ebenfalls später erläutert wird.

Weitere Einzelheiten des Bremsscheibenschlosses sind in den Fig. 4 bis 15 gezeigt, welche das Bremsscheibenschloss mit verschiedenen Stellungen des Bügels 21 bzw. des Riegels 33 zeigt. Der Schwenkhebel 31 ist um eine Schwenkachse 32 schwenkbar an dem Außengehäuse 13 gelagert. Die Schwenkachse 32 erstreckt sich senkrecht zu den Zeichnungsebenen der Fig. 4, 6, 7, 9, 10, 12 und 14. Der stiftförmige Riegel 33 erstreckt sich zu beiden Seiten des ersten Hebelarms 34A und verläuft mit seiner Längsachse parallel zu der Schwenkachse 32.

In einem Teilabschnitt des Innengehäuses 12 ist eine parallel zu der Längsachse des Außengehäuses 13 verlaufende schlitzförmige Ausnehmung 28 eingebracht, innerhalb der sich der Schwenkhebel 31 bzw. der erste Hebelarm 34A bewegen kann.

Der Halteabschnitt 29 des Bügels 21 besitzt eine entsprechende schlitzförmige Ausnehmung, so dass der Halteabschnitt 29 in zwei einander gegenüberliegende Schenkel 29A, 29B geteilt ist. Der Halteabschnitt 29 weist generell einen quer zur Bewegungsrichtung X des Bügels 21 verlaufenden Verriegelungsabschnitt 25 und einen schräg zur Bewegungsrichtung X verlaufenden Kulissenabschnitt 24 auf, wobei der Verriegelungsabschnitt 25 und der Kulissenabschnitt 24 durch die Ausnehmung im Halteabschnitt 29 geteilt sind, so dass an jedem Schenkel 29A, 29B jeweils ein Teilabschnitt des Verriegelungsabschnitts 25 und ein Teilabschnitt des Kulissenabschnitts 24 ausgebildet ist. Der Schwenkhebel 31 bzw. der erste Hebelarm 34A erstreckt sich zwischen den beiden Schenkeln 29A, 29B, wobei ein jeweiliges axiales Ende des Riegels 33 mit einem jeweiligen Teilabschnitt des Verriegelungsabschnitts 25 bzw. des Kulissenabschnitts 24 zusammenwirkt. Effektiv umfasst der Bügel 21 somit zwei Verriegelungsabschnitte 25 und zwei Kulissenabschnitte 24 in einer mittensymmetrischen Anordnung (vgl. Fig. 3 und 5), die jeweils mit einem zugeordneten Ende des Riegels 33 zusammenwirken, wobei im Folgenden der Einfachheit halber nur auf einen Verriegelungsabschnitt 25 bzw. Kulissenabschnitt 24 Bezug genommen wird.

An dem Außengehäuse 13 ist ein Blockierabschnitt 15 ausgebildet, welcher dem Verriegelungsabschnitt 25 in der Schließstellung des Bügels 21 gegenüberliegt, so dass der Verriegelungsabschnitt 25 und der Blockierabschnitt 15 in der Schließstellung des Bügels 21 eine Aufnahme für den Riegel 33 bilden. Der Blockierabschnitt 15 ist ebenfalls geteilt.

Der Bügel 21 ist mittels einer Bügelvorspannfeder 26 in Richtung der Öffnungsstellung vorgespannt, wobei sich die Bügelvorspannfeder 26 einerseits an dem Innengehäuse 12 und andererseits an einem Zentrierabschnitt 27 des Bügels 21 abstützt. In den Zeichnungen ist die Bügelvorspannfeder 26 stets in einem komprimierten Zustand gezeigt, auch wenn sich der Bügel 21 in einer Zwischenstellung oder der Öffnungsstellung befindet.

Der Schwenkhebel 31 ist mittels einer Schwenkhebelvorspannfeder 35 in Richtung einer Verriegelungsstellung (Fig. 4 bis 8) vorgespannt.

Im Inneren des Schlosskörpers 11 ist eine Betätigungseinrichtung vorgesehen, welche einen Elektromotor 51 umfasst, welcher eine Nockenscheibe 41 drehbar antreiben kann, deren Drehachse 42 parallel zu der Bewegungsrichtung X des Bügels 21 verläuft. An der Umfangsseite der Nockenscheibe 41 ist ein Steuerabschnitt 43 ausgebildet, welcher mit dem zweiten Hebelarm 34B des Schwenkhebels 31 zusammenwirkt. An der dem Elektromotor 51 zugewandten Stirnseite der Nockenscheibe 41 ist eine Erhebung 65 ausgebildet, welche über eine Kugel 63 einen Positionsschalter 61 betätigt. Der Elektromotor 51 und der Positionsschalter 61 sind mit einer Steuereinheit (nicht dargestellt) verbunden.

Die in den Aufnahmespalt 14 hineinragende Wippe 71 ist mit einem weiteren Positionsschalter (nicht dargestellt) verbunden, welcher dazu eingerichtet ist, die Position der Wippe 71 zu detektieren. Wenn sich in dem Aufnahmespalt 14 ein Gegenstand, insbesondere eine Bremsscheibe eines Fahrzeugs befindet, wird dies der Steuereinheit signalisiert. Hierdurch kann ein Alarmmodus des Bremsscheibenschlosses aktiviert werden, in welchem Manipulationen und/oder Bewegungen des Bremsscheibenschlosses durch geeignete Sensoren detektiert werden können. In einem solchen Fall kann die Steuereinheit eine Alarmsignalausgabeeinrichtung (nicht gezeigt) zum Ausgeben eines akustischen und/oder optischen Alarmsignals ansteuern und/oder das Aussenden entsprechender Alarmmeldungen per Funk veranlassen.

Nachfolgend wird die Funktionsweise des Bremsscheibenschlosses näher erläutert.

Wenn sich der Bügel 21 in der Schließstellung und der Riegel 33 in der Verriegelungsstellung befindet (Fig. 4 bis 8), ist der Bügel 21 an dem jeweiligen Verriegelungsabschnitt 25 mittels des Riegels 33 in der Schließstellung blockiert und ein Öffnen des Bügels 21 nicht möglich. Etwaige bei einem gewaltsamen Öffnungsversuch auf den Bügel 21 einwirkende Kräfte werden vom Verriegelungsabschnitt 25 über den Riegel 33 auf den Blockierabschnitt 15 und damit auf das Außengehäuse 13 übertragen. Somit wirken derartige Öffnungskräfte zumindest nicht ausschließlich auf die Drehachse 32 des Schwenkhebels 31 ein, so dass selbst bei einem etwaigen Bruch der Schwenkachse 32 kein unbefugtes Öffnen des Bremsscheibenschlosses möglich ist.

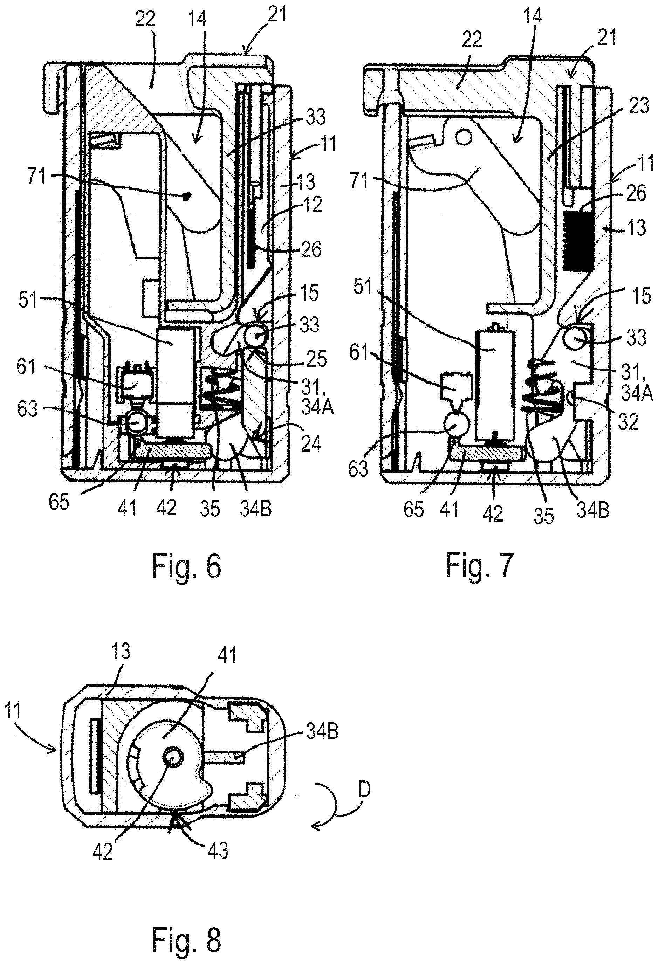

Zum befugten Öffnen des Bremsscheibenschlosses kann ein entsprechender Steuerbefehl an die Steuereinheit übermittelt werden, wobei dies vorzugsweise drahtlos geschieht, insbesondere mittels einer zugehörigen Fernbedienungseinheit oder eines entsprechend autorisierten mobilen Endgeräts des Benutzers (z.B. Smartphone, Smartwatch, Tablet oder dergleichen). Die Ansteuerung des Elektromotors 51 erfolgt derart, dass die Nockenscheibe 41 genau um eine Umdrehung in einer im Uhrzeigersinn verlaufenden Drehrichtung D (Fig. 8, 11, 13 und 15) angetrieben wird. Nachdem die Nockenscheibe 41 genau eine Umdrehung zurückgelegt hat, wird der Elektromotor 51 wieder deaktiviert, was mittels der Erhebung 65 und des Positionsschalters 61 gesteuert wird.

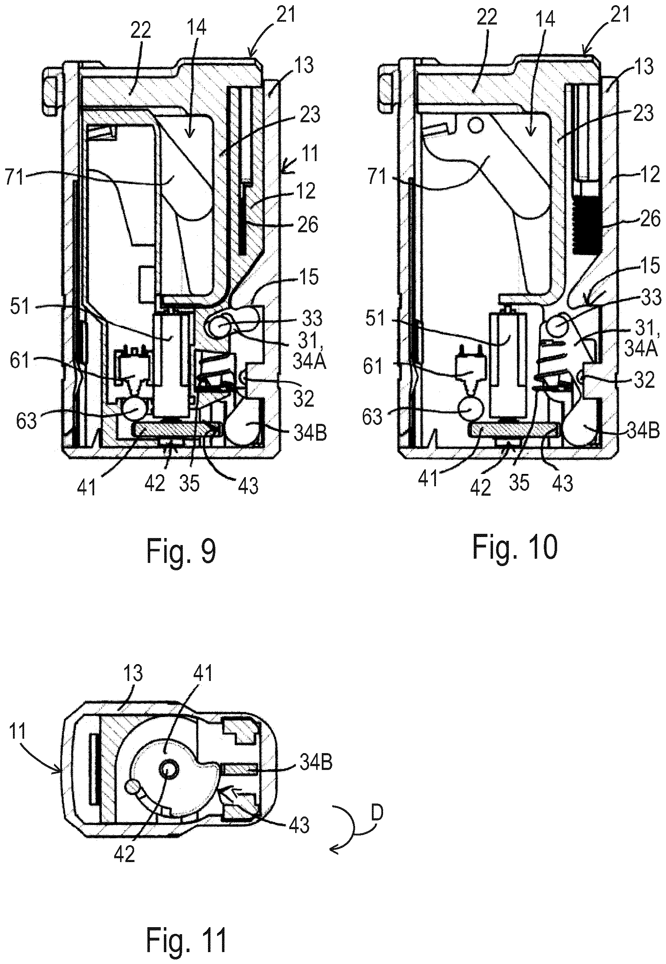

Fig. 9 bis 11 zeigen eine Zwischenstellung des Bremsscheibenschlosses mit der gedrehten Nockenscheibe 41 in der Entriegelungsposition, in welcher der Steuerabschnitt 43 aufgrund des in der Drehrichtung D zunächst zunehmenden Abstandes des Steuerabschnitts 43 von der Drehachse 42 den zweiten Hebelarm 34B des Schwenkhebels 31 in Richtung der benachbarten Wandung des Außengehäuses 13 verschwenkt. Durch diese Schwenkbewegung wird der Riegel 33 von seiner Verriegelungsstellung (Fig. 4 bis 8) in seine Entriegelungsstellung (Fig. 9 und 10) verschwenkt, so dass der Riegel 33 nun außer Eingriff mit dem Blockierabschnitt 15 und dem jeweiligen Verriegelungsabschnitt 25 steht.

Aufgrund der Vorspannung des Bügels 21 bewegt sich dieser nun in Richtung seiner Öffnungsstellung, da die Blockierung durch den Riegel 33 aufgehoben ist.

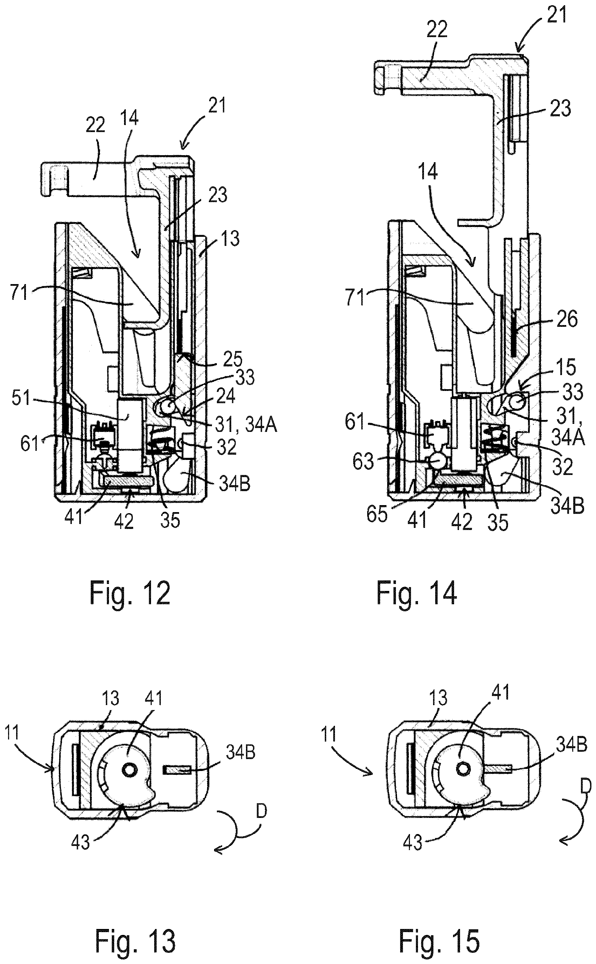

Dieser Vorgang ist in Fig. 12 dargestellt, die den Bügel 21 in einer Zwischenstellung zeigt. Wie die zugehörige Fig. 13 zeigt, ist die Nockenscheibe 41 zwischenzeitlich bereits wieder in ihre Grundstellung entsprechend Fig. 4 bis 8 zurückgekehrt. Da der zweite Hebelarm 34A nunmehr nicht mehr mit dem Steuerabschnitt 43 in Eingriff steht, kann der Schwenkhebel 31 durch die Schwenkhebelvorspannfeder 35 in Richtung seiner Verriegelungsstellung zurückgedrängt werden. Hierbei gleitet der Riegel 33 zunächst an der senkrecht zu dem jeweiligen Verriegelungsabschnitt 25 bzw. parallel zu der Bewegungsrichtung X verlaufenden Wandung des Halteabschnitts 29 entlang, und kehrt schließlich entlang des schräg verlaufenden jeweiligen Kulissenabschnitts 24 zurück in die Verriegelungsstellung.

Alternativ kann die Nockenscheibe 41 auch um mehrere (z.B. zwei) Umdrehungen rotiert werden, so dass auch dann eine Entriegelung erfolgen kann, wenn der Bügel 21 vorübergehend blockiert ist und nicht sofort in seine Öffnungsstellung springt.

Fig. 14 und 15 zeigen das Bremsscheibenschloss mit dem Bügel 21 in seiner Öffnungsstellung und dem Riegel 33 in seiner Verriegelungsstellung.

Nun kann das Bremsscheibenschloss an einer Bremsscheibe oder dergleichen festgelegt werden und dann in die Schließstellung überführt werden. Zum Schließen des Bügels 21 muss auf diesen eine Kraft ausgeübt werden, welche die Bügelvorspannfeder 26 wieder komprimiert. Während des Schließvorgangs gleitet der Riegel 33 am jeweiligen Kulissenabschnitt 24 entlang und wird hierdurch von der Verriegelungsstellung in die Entriegelungsstellung versetzt (ähnlich wie in Fig. 12). Der Riegel 33 gleitet wiederum an der seitlichen Wandung des jeweiligen Halteabschnitts 29 entlang, bis der Bügel 21 die Schließstellung erreicht hat. Aufgrund der Vorspannung der Schwenkhebelvorspannfeder 35 schnellt der Riegel 33 von der Entriegelungsstellung in die Verriegelungsstellung zurück und gelangt mit dem Blockierabschnitt 15 des Außengehäuses 13 und dem Verriegelungsabschnitt 25 des Bügels 21 in Eingriff.

Hierdurch weist das Bremsscheibenschloss eine Automatikfunktion auf, die ein Betätigen des Elektromotors 51 zum Verriegeln des Bremsscheibenschlosses bzw. des geschlossenen Bügels 21 entbehrlich macht.

Wie in Fig. 3 gezeigt ist, liegen der erste Hebelarm 34A und der zweite Hebelarm 34B sich einander gegenüber. Dadurch wird ein gewisser Massenausgleich zwischen dem ersten Hebelarm 34A mit dem Riegel 33, 34B und dem zweiten Hebelarm 34B erzielt. Gegenüber von außen auf das Bremsscheibenschloss und quer zur Schwenkachse 32 einwirkenden Impulsen ist hierdurch das Trägheitsmoment des Schwenkhebels 31 einschließlich des Riegels 33 sehr klein. Somit wird ein unbefugtes Öffnen des Bremsscheibenschlosses durch die sogenannte Hammerschlagmethode, bei welcher ein Trägheitsmoment des Riegels 33 ausgenutzt werden soll, um diesen vorübergehend in die Entriegelungsstellung zu versetzen, weitgehend ausgeschlossen. Grundsätzlich ist es nicht erforderlich, hierzu einen vollständigen Massenausgleich am Schwenkhebel 31 herbeizuführen. Ein etwaig verbleibendes geringes Trägheitsmoment bezüglich der Schwenkachse 32, welches durch einen quer zur Schwenkachse 32 einwirkenden translatorischen Impuls zu einer Rotationsbewegung des Schwenkhebels 31 führen könnte, kann durch die Schwenkhebelvorspannfeder 35 kompensiert werden.

### Bezugszeichenliste

- 11: Schlosskörper
- 12: Innengehäuse
- 13: Außengehäuse
- 14: Aufnahmespalt
- 15: Blockierabschnitt
- 21: Bügel
- 22: Sicherungsabschnitt
- 23: Verbindungsabschnitt
- 24: Kulissenabschnitt
- 25: Verriegelungsabschnitt
- 26: Bügelvorspannfeder
- 27: Zentrierabschnitt
- 28: Ausnehmung
- 29: Halteabschnitt
- 29A, 29B: Schenkel
- 31: Schwenkhebel
- 32: Schwenkachse
- 33: Riegel
- 34A: erster Hebelarm
- 34B: zweiter Hebelarm
- 35: Schwenkhebelvorspannfeder
- 41: Nockenscheibe
- 42: Drehachse
- 43: Steuerabschnitt
- 51: Elektromotor
- 61: Positionsschalter
- 63: Kugel
- 65: Erhebung
- 71: Wippe

- D: Drehrichtung
- X: Bewegungsrichtung

## Patentansprüche

1. Bügelschloss mit einem Schlosskörper (11) und einem Bügel (21), der relativ zu dem Schlosskörper (11) zwischen einer Öffnungsstellung und einer Schließstellung bewegbar ist, wobei im Inneren des Schlosskörpers (11) ein Riegel (33) angeordnet ist, welcher wahlweise in eine Entriegelungsstellung oder in eine Verriegelungsstellung bewegbar ist, wobei der Riegel den Bügel (21) an dem Schlosskörper (11) verriegelt, wenn der Bügel (21) sich in der Schließstellung befindet und der Riegel (33) sich in der Verriegelungsstellung befindet, wobei der Riegel (33) an einem um eine Schwenkachse (32) schwenkbaren Schwenkhebel (31) befestigt und zwischen der Entriegelungsstellung und der Verriegelungsstellung durch eine Schwenkbewegung des Schwenkhebels (31) bewegbar ist,
**dadurch gekennzeichnet,**
**dass** der Riegel (33) zwei einander entgegengesetzte Enden aufweist, die auf zueinander gegenüber liegenden Seiten des Schwenkhebels (31) angeordnet und entlang einer Achse ausgerichtet sind, die parallel zu der Schwenkachse (32) des Schwenkhebels (31) verläuft, wobei der Bügel (21) zwei Verriegelungsabschnitte (25) aufweist, wobei jedes der zwei Enden des Riegels (33) mit einem der zwei Verriegelungsabschnitte (25) des Bügels (21) in Eingriff steht, wenn der Bügel (21) sich in der Schließstellung befindet und der Riegel (33) sich in der Verriegelungsstellung befindet.

2. Bügelschloss nach Anspruch 1,
wobei der Schwenkhebel (31) einschließlich des Riegels (33) eine Massenverteilung bezüglich der Schwenkachse (32) aufweist, welche derart gewählt ist, dass ein quer zur Schwenkachse (32) auf das Bügelschloss einwirkender Impuls zumindest im Wesentlichen keine Schwenkbewegung des Schwenkhebels (31) verursacht.

3. Bügelschloss nach Anspruch 1 oder 2,
wobei der Schwenkhebel (31) einen ersten Hebelarm (34A) und einen zweiten Hebelarm (34B) umfasst, wobei der Riegel (33) an dem ersten Hebelarm (34A) befestigt ist.

4. Bügelschloss nach Anspruch 3,
wobei der Riegel (33) in Richtung der Verriegelungsstellung vorgespannt ist.

5. Bügelschloss nach Anspruch 4,
wobei in dem Schlosskörper (11) eine Betätigungseinrichtung angeordnet ist, welche mit dem Schwenkhebel (31) zusammenwirkt, um den Riegel (33) entgegen seiner Vorspannung von der Verriegelungsstellung in die Entriegelungsstellung zu bewegen;
wobei die Betätigungseinrichtung vorzugsweise mit dem zweiten Hebelarm (34B) zusammenwirkt.

6. Bügelschloss nach Anspruch 5,
wobei die Betätigungseinrichtung eine um eine Drehachse (42) drehbare Nockenscheibe (41) mit einem Steuerabschnitt (43) umfasst, und wobei der Steuerabschnitt (43) den Schwenkhebel (31) von der Verriegelungsstellung in die Entriegelungsstellung verschwenkt, wenn sich die Nockenscheibe (41) in einer vorbestimmten Entriegelungsposition befindet.

7. Bügelschloss nach Anspruch 6,
wobei die Betätigungseinrichtung einen Elektromotor (51) zum Antreiben der Nockenscheibe (41) und eine mit dem Elektromotor (51) verbundene Steuereinheit umfasst, und wobei die Steuereinheit dazu eingerichtet ist, nach Empfang eines übermittelten Entriegelungsbefehls den Elektromotor (51) derart zu betätigen, dass der Steuerabschnitt den Schwenkhebel (31) zumindest vorübergehend in die Entriegelungsstellung verschwenkt.

8. Bügelschloss nach Anspruch 7,
wobei die Steuereinheit dazu eingerichtet ist, nach Empfang eines übermittelten Entriegelungsbefehls den Elektromotor (51) derart zu betätigen, dass die Nockenscheibe (41) genau um eine Umdrehung oder ein ganzzahliges Vielfaches einer Umdrehung gedreht wird.

9. Bügelschloss nach einem der Ansprüche 3 bis 8,
wobei der Bügel (21) und/oder ein Innengehäuse (12) des Schlosskörpers (11) eine jeweilige schlitzförmige Ausnehmung (28) aufweist, und wobei sich der erste Hebelarm (34A) in die Ausnehmung (28) hinein erstreckt.

10. Bügelschloss nach einem der vorhergehenden Ansprüche,
wobei der Bügel (21) in Richtung der Öffnungsstellung vorgespannt ist und der Bügel (21) durch die Vorspannung von der Schließstellung in die Öffnungsstellung bewegt wird, wenn der Riegel (33) in die Entriegelungsstellung bewegt wird.

11. Bügelschloss nach einem der vorhergehenden Ansprüche,
wobei der Riegel (33) in Richtung der Verriegelungsstellung vorgespannt ist, und wobei der Bügel (21) einen Kulissenabschnitt (24) aufweist, welcher mit dem Riegel (33) derart zusammenwirkt, dass durch ein Bewegen des Bügels (21) von der Öffnungsstellung in die Schließstellung der Riegel (33) entgegen seiner Vorspannung vorübergehend in die Entriegelungsstellung bewegt wird und beim Erreichen der Schließstellung aufgrund der Vorspannung zurück in die Verriegelungsstellung bewegt wird und in Eingriff mit den Verriegelungsabschnitten (25) des Bügels (21) gebracht wird.

12. Bügelschloss nach einem der vorhergehenden Ansprüche,
wobei die zwei Verriegelungsabschnitte (25) des Bügels (21) in einer mittensymmetrischen Anordnung vorgesehen sind; und/oder wobei der Schlosskörper (11) einen Blockierabschnitt (15) umfasst, mit welchem der Riegel (33) in Eingriff steht oder welcher unmittelbar benachbart zu dem Riegel (33) angeordnet ist, wenn der Riegel (33) sich in der Verriegelungsstellung befindet.

13. Bügelschloss nach einem der vorhergehenden Ansprüche,
wobei der Bügel (21) linear in einer Bewegungsrichtung (X) beweglich ist, wobei das Bügelschloss vorzugsweise als ein Bremsscheibenschloss mit einem Aufnahmespalt (14) für eine Bremsscheibe ausgebildet ist, wobei der Bügel (21) in der Öffnungsstellung außerhalb des Schlosskörpers (11) zumindest im Wesentlichen L-förmig ist und einen länglichen Sicherungsabschnitt (22) und einen länglichen Verbindungsabschnitt (23) aufweist, wobei der Sicherungsabschnitt (22) sich quer zu der Bewegungsrichtung (X) des Bügels erstreckt und ein freies Ende besitzt, wobei der Verbindungsabschnitt (23) sich zumindest im Wesentlichen parallel zu der Bewegungsrichtung (X) des Bügels (21) erstreckt und den Sicherungsabschnitt (22) mit dem Schlosskörper (11) verbindet, und wobei der Bügel (21) in der Schließstellung zusammen mit dem Schlosskörper (11) den Aufnahmespalt (14) umgrenzt.

14. Bügelschloss nach einem der vorhergehenden Ansprüche,
wobei der Bügel (21) eine Bügelerstreckungsebene aufspannt, und wobei die Schwenkachse (32) des Schwenkhebels (31) senkrecht zu der Bügelerstreckungsebene verläuft.

15. Bügelschloss nach einem der Ansprüche 6 bis 8,
wobei der Bügel (21) eine Bügelerstreckungsebene aufspannt, wobei die Drehachse (42) der Nockenscheibe (41) in der Bügelerstreckungsebene oder parallel versetzt hierzu verläuft, und wobei der Steuerabschnitt (43) an einer Umfangsseite der Nockenscheibe (41) angeordnet ist.

## Claims

1. A hoop lock having a lock body (11) and a hoop (21) which is movable relative to the lock body (11) between an open position and a closed position, wherein a latch (33) is arranged in the interior of the lock body (11) and is selectively movable into an unlocked position or into a locked position, with the latch locking the hoop (21) at the lock body (11) when the hoop (21) is in the closed position and the latch (33) is in the locked position, wherein the latch (33) is fastened to a pivot lever (31) pivotable about a pivot axle (32) and is movable between the unlocked position and the locked position by a pivot movement of the pivot lever (31), **characterized in that**
the latch (33) has two ends which are opposite one another, which are arranged on sides of the pivot lever (31) disposed opposite one another and which are aligned along an axis which extends in parallel with the pivot axle (32) of the pivot lever (31), with the hoop (21) having two locking sections (25), and with each of the two ends of the latch (33) being in engagement with one of the two locking sections (25) of the hoop (21) when the hoop (21) is in the closed position and the latch (33) is in the locked position.

2. A hoop lock in accordance with claim 1,
wherein the pivot lever (31), including the latch (33), has a mass distribution with respect to the pivot axle (32) that is selected such that an impulse acting on the hoop lock transversely to the pivot axle (32) at least substantially does not cause a pivot movement of the pivot lever (31).

3. A hoop lock in accordance with claim 1 or claim 2,
wherein the pivot lever (31) comprises a first lever arm (34A) and a second lever arm (34B), with the latch (33) being fastened to the first lever arm (34A).

4. A hoop lock in accordance with claim 3,
wherein the latch (33) is preloaded in the direction of the locked position.

5. A hoop lock in accordance with claim 4,
wherein an actuation device is arranged in the lock body (11) and cooperates with the pivot lever (31) to move the latch (33) against its preload from the locked position into the unlocked position; and wherein the actuation device preferably cooperates with the second lever arm (34B).

6. A hoop lock in accordance with claim 5,
wherein the actuation device comprises a cam disk (41) rotatable about a rotatable axle (42) and having a cam section (43); and wherein the cam section (43) pivots the pivot lever (31) from the locked position into the unlocked position when the cam disk (41) is in a predetermined unlocked position.

7. A hoop lock in accordance with claim 6,
wherein the actuation device comprises an electric motor (51) for driving the cam disk (41) and a control unit connected to the electric motor (51); and wherein the control unit is configured to actuate the electric motor (51) after reception of a transmitted unlocking command such that the cam section at least temporarily pivots the pivot lever (31) into the unlocked position.

8. A hoop lock in accordance with claim 7,
wherein the control unit is configured to actuate the electric motor (51) after reception of a transmitted unlocking command such that the cam disk (41) is rotated by exactly one revolution or a whole-number multiple of one revolution.

9. A hoop lock in accordance with any one of the claims 3 to 8,
wherein the hoop (21) and/or an inner housing (12) of the lock body (11) has/have a respective slit-shaped cutout (28); and wherein the first lever arm (34A) extends into the cutout (28).

10. A hoop lock in accordance with any one of the preceding claims,
wherein the hoop (21) is preloaded in the direction of the open position; and wherein the hoop (21) is moved from the closed position into the open position by the preload when the latch (33) is moved into the unlocked position.

11. A hoop lock in accordance with any one of the preceding claims,
wherein the latch (33) is preloaded in the direction of the locked position; and wherein the hoop (21) has a slot section (24) which cooperates with the latch (33) such that the latch (33) is temporarily moved into the unlocked position against its preload by a movement of the hoop (21) from the open position into the closed position and, on reaching the closed position, said latch (33) is moved back due to the preload into the locked position and enters into engagement with the locking section (25) of the hoop (21).

12. A hoop lock in accordance with any one of the preceding claims,
wherein the two locking sections (25) of the hoop (21) are provided in a center-symmetrical arrangement; and/or
wherein the lock body (11) comprises a blocking section (15) with which the latch (33) is in engagement or which is arranged directly adjacent to the latch (33) when the latch (33) is in the locked position.

13. A hoop lock in accordance with any one of the preceding claims,
wherein the hoop (21) is linearly movable in a direction of movement (X); wherein the hoop lock is preferably configured as a brake disk lock having a receiving gap (14) for a brake disk; wherein the hoop (21) is at least substantially L-shaped in the open position outside the lock body (11) and has an elongate securing section (22) and an elongate connection section (23); wherein the securing section (22) extends transversely to the direction of movement (X) of the hoop and has a free end; wherein the connection section (23) at least substantially extends in parallel with the direction of movement (X) of the hoop (21) and connects the securing section (22) to the lock body (11); and wherein the hoop (21) bounds the receiving gap (14) together with the lock body (11) in the closed position.

14. A hoop lock in accordance with any one of the preceding claims,
wherein the hoop (21) spans a plane of extent of the hoop; and wherein the pivot axle (32) of the pivot lever (31) extends perpendicular to the plane of extent of the hoop.

15. A hoop lock in accordance with any one of the claims 6 to 8,
wherein the hoop (21) spans a plane of extent of the hoop; wherein the rotatable axle (42) of the cam disk (41) extends in the plane of extent of the hoop or offset in parallel therewith; and wherein the cam section (43) is arranged at a peripheral side of the cam disk (41).

## Revendications

1. Cadenas à arceau comportant un corps de cadenas (11) et un arceau (21) qui peut être déplacé par rapport au corps de cadenas (11) entre une position ouverte et une position fermée, dans lequel un verrou (33) est disposé à l'intérieur du corps de cadenas (11) et peut être déplacé au choix jusque dans une position de déverrouillage ou jusque dans une position de verrouillage, le verrou verrouillant l'arceau (21) au corps de cadenas (11), lorsque l'arceau (21) est en position fermée et que le verrou (33) est en position de verrouillage, le verrou (33) étant fixé à un levier pivotant (31) qui peut pivoter autour d'un axe de pivotement (32) et pouvant être déplacé entre la position de déverrouillage et la position de verrouillage par un mouvement de pivotement du levier pivotant (31),
**caractérisé en ce que**
le verrou (33) comprend deux extrémités opposées l'une à l'autre qui sont disposées sur des côtés opposés l'un à l'autre du levier pivotant (31) et qui sont orientées le long d'un axe parallèle à l'axe de pivotement (32) du levier pivotant (31), l'arceau (21) comprenant deux portions de verrouillage (25), chacune des deux extrémités du verrou (33) étant en engageant avec l'une des deux portions de verrouillage (25) de l'arceau (21) lorsque l'arceau (21) est en position fermée et que le verrou (33) est en position de verrouillage.

2. Cadenas à arceau selon la revendication 1,
dans lequel
le levier pivotant (31), y compris le verrou (33), présente une répartition des masses par rapport à l'axe de pivotement (32) qui est choisie de telle sorte qu'une impulsion agissant sur le cadenas à arceau transversalement à l'axe de pivotement (32) ne provoque au moins sensiblement aucun mouvement de pivotement du levier pivotant (31).

3. Cadenas à arceau selon la revendication 1 ou 2,
dans lequel
le levier pivotant (31) comprend un premier bras de levier (34A) et un deuxième bras de levier (34B), le verrou (33) étant fixé au premier bras de levier (34A).

4. Cadenas à arceau selon la revendication 3,
dans lequel
le verrou (33) est précontraint vers la position de verrouillage.

5. Cadenas à arceau selon la revendication 4,
dans lequel
un dispositif d'actionnement est disposé dans le corps de cadenas (11), qui coopère avec le levier pivotant (31) pour déplacer le verrou (33) à l'encontre de sa précontrainte depuis la position de verrouillage jusqu'à la position de déverrouillage ;
le dispositif d'actionnement coopère de préférence avec le deuxième bras de levier (34B).

6. Cadenas à arceau selon la revendication 5,
dans lequel
le dispositif d'actionnement comprend un disque à came (41) pouvant tourner autour d'un axe de rotation (42) et ayant une portion de commande (43), et
la portion de commande (43) fait pivoter le levier pivotant (31) depuis la position de verrouillage jusqu'à la position de déverrouillage lorsque le disque à came (41) se trouve dans une position de déverrouillage prédéterminée.

7. Cadenas à arceau selon la revendication 6,
dans lequel
le dispositif d'actionnement comprend un moteur électrique (51) pour l'entraînement du disque à came (41) et une unité de commande reliée au moteur électrique (51), et
l'unité de commande est adaptée pour actionner le moteur électrique (51) après réception d'un ordre de déverrouillage transmis, de telle sorte que la portion de commande fait pivoter le levier pivotant (31) au moins temporairement jusque dans la position de déverrouillage.

8. Cadenas à arceau selon la revendication 7,
dans lequel
l'unité de commande est adaptée pour actionner, après réception d'un ordre de déverrouillage transmis, le moteur électrique (51) de telle sorte que le disque à came (41) soit tourné exactement d'un tour ou d'un multiple entier d'un tour.

9. Cadenas à arceau selon l'une des revendications 3 à 8,
dans lequel
l'arceau (21) et/ou un boîtier intérieur (12) du corps de cadenas (11) présente un évidement respectif (28) en forme de fente, et
le premier bras de levier (34A) s'étend jusqu'à l'intérieur de l'évidement (28).

10. Cadenas à arceau selon l'une des revendications précédentes,
dans lequel
l'arceau (21) est précontraint vers la position ouverte et l'arceau (21) est déplacé par la précontrainte depuis la position fermée jusqu'à la position ouverte lorsque le verrou (33) est déplacé jusque dans la position de déverrouillage.

11. Cadenas à arceau selon l'une des revendications précédentes,
dans lequel
le verrou (33) est précontraint en direction de la position de verrouillage, et l'arceau (21) comprend une portion formant coulisse (24) qui coopère avec le verrou (33) de telle sorte que, par déplacement de l'arceau (21) depuis la position ouverte jusqu'à la position fermée, le verrou (33) est temporairement déplacé à l'encontre de sa précontrainte jusque dans la position de déverrouillage et, lorsque la position fermée est atteinte, est ramené dans la position de verrouillage en raison de la précontrainte et est amené en engagement avec les portions de verrouillage (25) de l'arceau (21).

12. Cadenas à arceau selon l'une des revendications précédentes,
dans lequel
les deux portions de verrouillage (25) de l'arceau (21) sont prévues dans une disposition à symétrie centrale ; et/ou
le corps de cadenas (11) comprend une portion de blocage (15) avec laquelle le verrou (33) est en engagement ou qui est disposée directement au voisinage du verrou (33) lorsque le verrou (33) se trouve dans la position de verrouillage.

13. Cadenas à arceau selon l'une des revendications précédentes,
dans lequel
l'arceau (21) est mobile linéairement dans une direction de mouvement (X), le cadenas à arceau est réalisé de préférence sous forme d'antivol pour disque de frein ayant une fente de réception (14) pour un disque de frein, l'arceau (21) est au moins sensiblement en forme de L dans la position ouverte à l'extérieur du corps de cadenas (11) et présente une portion de blocage allongée (22) et une portion de liaison allongée (23),
la portion de blocage (22) s'étend transversalement à la direction de mouvement (X) de l'arceau et présente une extrémité libre,
la portion de liaison (23) s'étend au moins sensiblement parallèlement à la direction de mouvement (X) de l'arceau (21) et relie la portion de blocage (22) au corps de cadenas (11), et
l'arceau (21), en position fermée, délimite la fente de réception (14) conjointement avec le corps de cadenas (11).

14. Cadenas à arceau selon l'une des revendications précédentes,
dans lequel
l'arceau (21) définit un plan d'extension de l'arceau, et
l'axe de pivotement (32) du levier pivotant (31) s'étend perpendiculairement au plan d'extension de l'arceau.

15. Cadenas à arceau selon l'une des revendications 6 à 8,
dans lequel
l'arceau (21) définit un plan d'extension de l'arceau,
l'axe de rotation (42) du disque à came (41) s'étend dans le plan d'extension de l'arceau ou est décalé parallèlement à celui-ci, et
la portion de commande (43) est disposée sur un côté périphérique du disque à came (41).
